# EUROPÄISCHE PATENTANMELDUNG

(11) **EP 0 871 068 A1**
(43) Veröffentlichungstag der Anmeldung: **14.10.1998**
(21) Anmeldenummer: 97105704.7
(22) Anmeldetag: 07.04.1997
(51) Int. Cl.: G03D 13/00, G03B 27/46

(54) **Verfahren und Vorrichtung zur Behandlung von Blattmaterial**

(71) Anmelder: GRETAG IMAGING AG, CH-8105 Regensdorf (CH)
(72) Erfinder: Wacker, Rudolf, 5022 Rombach (CH)
(74) Vertreter: Schwabe, Hans-Georg, Dipl.-Ing.

(57) **Zusammenfassung**

In einer Einlaufreihenfolge anfallende einzelne Blätter (B) eines zu behandelnden Blattmaterials werden auf zwei oder mehrere nebeneinander liegende Transportbahnen (201-203) verteilt, entlang dieser Transportbahnen durch eine Behandlungsstation (200) geführt und danach wieder nach ihrer ursprünglichen Einlaufreihenfolge sortiert. Die Verteilung der Blätter (B) erfolgt unter Berücksichtigung der Auslastung der einzelnen Transportbahnen (201-203) in dem Sinne, dass die Zwischenräume zwischen in derselben Transportbahn aufeinanderfolgenden Blättern insgesamt minimal sind. Auf diese Weise wird auch bei aufeinanderfolgenden Blättern unterschiedlicher Längen ein annähernd gleich hoher Durchsatz wie bei aufeinanderfolgenden Blättern gleicher Längen erreicht.

## Beschreibung

Die Erfindung betrifft ein Verfahren zur Behandlung von Blattmaterial gemäss dem Oberbegriff des unabhängigen Anspruchs 1 sowie eine entsprechende Vorrichtung gemäss dem Oberbegriff des unabhängigen Anspruchs 6. Insbesondere, aber nicht ausschliessend, befasst sich die Erfindung mit der Verarbeitung, speziell Entwicklung von fotografischem Blattmaterial in einer für Einzelblattverarbeitung eingerichteten Printer-Papierprozessor-Kombination, einem sog. Minilab.

Die typische Arbeitsweise eines heutigen, für Einzelblattverarbeitung eingerichteten Minilabs ist wie folgt:

Der Einzelblatt-Printer zieht fotografisches Kopierpapier aus einer Kassette und schneidet je nach gerade gewünschtem Format ein Blatt entsprechender Länge ab. Das Blatt wird aufdie Papierbühne des Printers transportiert, dort bildmässig belichtet und schliesslich wieder aus dem Bereich der Papierbühne entfernt. Die belichteten Blätter werden anschliessend einem Papierprozessor zugeführt und dort entwickelt. Das Minilab verarbeitet verschiedene Papierbreiten. Um den Papierprozessor bei kleinen Papierbreiten voll ausnützen zu können, werden die zu entwickelnden Blätter mehrbahnig durch den Prozessor geführt. Dazu werden die vom Printer sequentiell angelieferten Blätter mit einem Querverteiler aufdie einzelnen Bahnen des Papierprozessors verteilt. Am Ausgang des Papierprozessors werden die Blätter wieder in ihrer ursprünglichen Reihenfolge gesammelt und gestapelt.

Die Verteilung der Blätter auf die einzelnen Transportbahnen des Papierprozessors erfolgt bei den bekannten Minilabs nach einer festen zyklischen Sequenz. Im Falle von drei Transportbahnen also 1. Blatt aufBahn 1, zweites Blatt auf Bahn 2, drittes Blatt auf Bahn 3, viertes Blatt wieder auf Bahn 1, fünftes Blatt auf Bahn 2 und so weiter. Diese feste zyklische Sequenz ist bestens geeignet, wenn sich Blätter gleicher Grösse folgen. Wenn die Blätter aber unterschiedliche Längen haben (z.B. beim Panorama-Format oder bei APS-Film), so entstehen grosse ungenützte Zwischenräume zwischen den in den einzelnen Transportbahnen aufeinanderfolgenden Blättern und der Papierprozessor kann nicht voll ausgenützt werden. Die Produktivität des Papierprozessors und damit des Gesamtgeräts wird dadurch häufig spürbar reduziert.

Durch die vorliegende Erfindung soll nun diese Schwierigkeit überwunden und ein Verfahren zur Behandlung von Blattmaterial der gattungsgemässen Art sowie die entsprechende Behandlungsvorrichtung dahingehend verbessert werden, dass auch bei aufeinanderfolgenden Blättern unterschiedlicher Längen ein annähernd gleich hoher Durchsatz wie bei aufeinanderfolgenden Blättern gleicher Längen erreicht wird.

Die Lösung dieser der Erfindung zugrundeliegenden Aufgabe ergibt sich in ihrer allgemeinsten Form aus den im kennzeichnenden Teil des unabhängigen Anspruchs 1 bzw. des unabhängigen Anspruchs 6 beschriebenen Merkmalen. Besonders vorteilhafte Ausgestaltungen und Weiterbildungen sind Gegenstand der abhängigen Ansprüche 2-5 und 7-8.

Gemäss dem grundlegenden Gedanken der Erfindung werden also die zu behandelnden Blätter nicht mehr nach einem festen zyklischen Verteilschema, sondern unter Berücksichtigung der Auslastung der einzelnen Transportbahnen auf die einzelnen Bahnen verteilt. Auf diese Weise werden die Zwischenräume zwischen in derselben Transportbahn aufeinanderfolgenden Blättern insgesamt minimal und die Auslastung der Behandlungsstation entsprechend maximal.

Im folgenden wird die Erfindung anhand der Zeichnung näher erläutert. Es zeigen:
- Fig. 1: eine schematische Prinzipskizze eines Ausführungsbeispiels der erfindungsgemässen Behandlungsvorrichtung im Kontext eines Minilabs und
- Fig. 2-5: Skizzen zur Erläuterung der Funktionsweise des erfindungsgemässen Verfahrens.

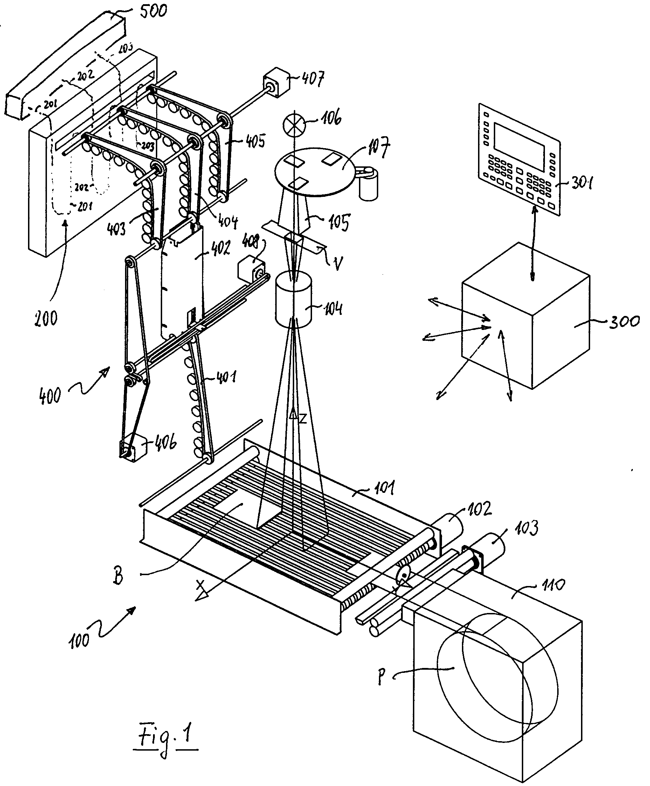

Die Prinzipskizze der Fig. 1 zeigt die für das Verständnis der Erfindung relevanten Komponenten eines sog. Minilabs, also eines integrierten fotografischen Kopiergeräts mit Printer und Papierprozessor. Das gezeigte Minilab umfasst, wie schon erwähnt, einen fotografischen Printer 100 und eine Behandlungsstation in Form eines Papierprozessors 200 sowie diverse diese verbindende und steuernde Komponenten, auf welche noch eingegangen wird.

Der Printer 100 umfasst eine Papierbühne 101 mit Papiertransport 102 und Papierauszug 103, ein Belichtungsobjektiv 104, einen Lichtmischer 105 zur Beaufschlagung der Kopiervorlagen V mit Kopierlicht und eine Kopierlichtquelle 106 sowie eine Filtereinrichtung 107 zur Einfärbung des Kopierlichts. Ein zentraler Rechner 300 mit Ein/Ausgabe-Einheit 301 steuert sowohl den Printer 100 als auch alle übrigen Komponenten, insbesondere auch die noch zu erläuternden Abläufe des erfindungsgemässen Verfahrens. Die Verbindungen zwischen dem Rechner 300 und den mit ihm zusammenarbeitenden Komponenten sind der Übersichtlichkeit halber nicht dargestellt. Dem Printer 100 vorgeschaltet ist eine Papierkassette 110 mit einem zu einer Rolle aufgewickelten Vorrat an Kopierpapier P. Der Printer 100 ist in jeder Hinsicht absolut konventionell und bedarf deshalb keiner näheren Erläuterung.

Der Papierprozessor 200 ist dem Printer 100 bezüglich des Papierlaufs nachgeschaltet. Er ist ebenfalls absolut konventionell aufgebaut und umfasst im gezeigten Ausführungsbeispiel drei Transportbahnen, entlang welcher das ihm zugeführte Blattmaterial durch den Prozessor geführt wird. Die drei Transportbahnen und die zugehörigen Transportmittel sind in der Zeichnung nur symbolisch durch punktierte Linien 201, 202 und 203 angedeutet.

Zwischen dem Papierprozessor 200 und dem Printer 100 befindet sich eine Blattverteileinrichtung 400 an sich ebenfalls konventioneller Bauart. Die Blattverteileinrichtung umfasst eine Blattzuführeinrichtung 401, einen Querverteiler 402 und drei Blattabführeinrichtungen 403, 404 und 405. Zwei Motoren 406 und 407 treiben die Blattzuführ- und die Blattabführeinrichtungen 401 bzw. 403-405, ein weiterer Motor 408 treibt den Querverteiler 402. Die drei Motoren 406-408 werden vom zentralen Rechner 300 angesteuert. Die Blattzuführeinrichtung 401 nimmt die einzelnen vom Printer 100 kommenden belichteten Blätter B aufund führt sie dem Querverteiler 402 zu. Dieser verteilt die einzelnen Blätter B in der erfindungsgemässen Art und Weise auf die drei Blattabführeinrichtungen 403-405, welche die Blätter ihrerseits den drei Transportbahnen 201-203 des Papierprozessors 200 zuführen. In Aufbau und prinzipieller Funktionsweise entspricht die Blattverteileinrichtung 400 herkömmlichen Einrichtungen dieser Art, so dass sich eine nähere Erläuterung erübrigt. Der Unterschied gegenüber dem Stand der Technik liegt in der erfindungsgemässen Art und wie die einzelnen Blätter auf die drei Transportbahnen 201-203 der Behandlungsstation, hier also des Papierprozessors 200, verteilt werden.

Am Ausgang des Papierprozessors 200 befindet sich eine Sortiereinrichtung 500, welche die ihr von den drei Transportbahnen 201-203 übergebenen Blätter B wieder in die ursprüngliche, im folgenden als Einlaufreihenfolge bezeichnete Reihenfolge sortiert und stapelt. Auch diese Sortiereinrichtung 500 ist konventionell aufgebaut und bedarf deshalb keiner weiteren Erläuterung.

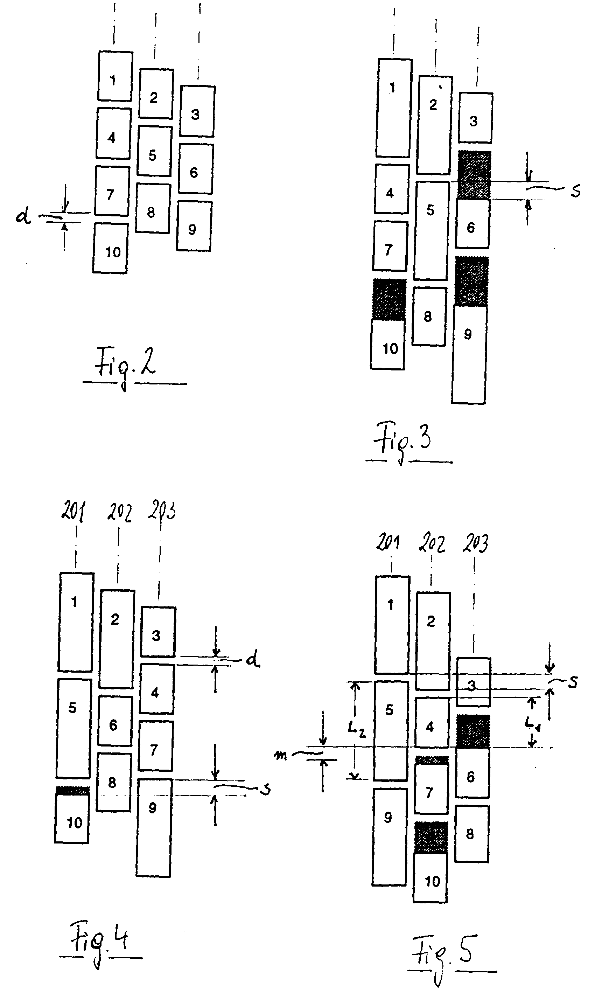

Der Kern der Erfindung liegt, wie schon erwähnt, in der speziellen Art und Weise, wie die einzelnen Blätter aufdie Transportbahnen aufgeteilt werden. Die Figuren 2-7 illustrieren dies anhand von Beispielen mit drei Transportbahnen; bei mehreren Transportbahnen sind die Verhältnisse analog. Die Ziffern 1-10 in den die einzelnen Blätter symbolisierenden Rechtecken kennzeichnen die Einlaufreihenfolge der einzelnen Blätter, also die Sequenz, in der die (hier zehn) Blätter vom Printer 100 an die Blattverteileinrichtung 400 übergeben werden.

Fig. 2 zeigt die konventionelle Verteilung von Blättern gleicher Länge nach einem festen zyklischen Verteilschema. Wie man erkennt, liegen die einzelnen abgesehen von einem systematischen Sicherheitsabstand optimal dicht.

Fig. 3 zeigt dasselbe konventionelle Verteilschema, allerdings mit Blättern unterschiedlicher Länge. Das Verteilschema ist ausserdem auf eine an sich bekannte und übliche spätere Sortierung der Blätter nach Massgabe ihrer vorlaufenden Querkanten ausgerichtet. Dies bedingt, dass die vorlaufenden Querkanten der Blätter in derselben Reihenfolge wie die Einlaufreihenfolge der Blätter zu liegen kommen und jeweils um mindestens einen systematisch bedingten Sortierabstand s auseinander liegen müssen. Wie man erkennt, entstehen bei diesem Verteilschema je nach Längenverteilung der Blätter beträchtliche, in der Zeichnung durch graue Felder gekennzeichnete Leerräume zwischen einzelnen Blättern. Erfahrungsgemäss gehen bei diesem konventionellen Verteilschema durchschnittlich etwa 20% an Platz und damit an Prozessorleistung verloren.

Fig. 4 zeigt die Situation mit der gleichen Längenverteilung der Blätter wie in Fig.3, jedoch mit einer Verteilung der Blätter auf die einzelnen Transportbahnen gemäss einer ersten Ausführungsform des erfindungsgemässen Verfahrens, welche analog Fig.3 für eine nachfolgende Sortierung der Blätter nach ihren vorlaufenden Querkanten ausgelegt ist.

Hier wird das jeweils nächstfolgende Blatt im Unterschied zu Fig.3 nicht nach einem festen zyklischen Verteilschema, sondern situativ jeweils immer in derjenigen Transportbahn angeordnet, auf welcher noch der meiste Platz zur Verfügung steht. Dies ist offensichtlich in derjenigen Transportbahn der Fall, wo sich die nachlaufende Querkante des in der Bahn vorhergehenden Blatts in Bewegungsrichtung am weitesten vorne befindet. Wie man erkennt, wird auf diese Weise eine ähnlich kompakte Verteilung erreicht wie bei Blättern gleicher Länge gem. Fig. 1. Wegen des systematisch bedingten minimalen Sortierabstands s sind kleine Leerräume (im Beispiel bei Blatt Nr. 10) allerdings nicht vollständig zu vermeiden. In der Praxis beträgt dieser Verlust im Durchschnitt etwa 2,5%, was gegenüber den 20% gemäss Fig.3 eine beträchtliche Verbesserung darstellt.

Fig. 5 zeigt die Situation mit der gleichen Längenverteilung der Blätter wie in Fig.3 und Fig.4, jedoch mit einer Verteilung der Blätter auf die einzelnen Transportbahnen gemäss einer zweiten Ausführungsform des erfindungsgemässen Verfahrens, welche für eine an sich ebenfalls bekannte und übliche nachfolgende Sortierung der Blätter nach ihren nachlaufenden Querkanten ausgelegt ist. Hierbei müssen die nachlaufenden Querkanten der Blätter in derselben Reihenfolge wie die Einlaufreihenfolge der Blätter zu liegen kommen und jeweils um mindestens einen systematisch bedingten Sortierabstand s von einander entfernt sein.

Ähnlich der Ausführungsform nach Fig.4 wird hier das jeweils nächstfolgende Blatt ebenfalls situativ jeweils in derjenigen Transportbahn angeordnet, auf welcher noch der meiste Platz zur Verfügung steht. Allerdings geschieht dies nur wenn eine weitere Bedingung erfüllt ist. Ist diese Bedingung nicht erfüllt, so wird das Blatt in derjenigen Transportbahn angeordnet, in der der zweitmeiste Platz zur Verfügung steht. Die genannte weitere Bedingung bezieht die Längen des betreffenden Blatts und des nächsten auf dieses folgenden Blatts mit ein. Die Bedingung gilt als erfüllt, wenn die um den genannten systematisch bedingten Sortierabstand s und einen vorgegebenen Minimalabstand m vergrösserte Länge L₁ des betreffenden Blatts nicht kleiner ist als die Länge L₂ des in der Einlaufreihenfolge diesem Blatt folgenden Blatts. Im Fall der Blätter Nr.5, 6, 7, 9 und 10 ist die Bedingung offensichtlich erfüllt, im Fall der Blätter Nr. 4 und 8 ist die Bedingung nicht erfüllt.

Wird die Ausführungsform nach Fig.4 auf mehr als d.h. allgemein n Transportbahnen erweitert, so müssen für eine effiziente Zuteilung der Blätter auf die einzelnen Bahnen mindestens n-1 aufeinanderfolgende Blätter berücksichtigt werden.

Wegen des systematisch bedingten minimalen Sortierabstands s sind vereinzelte kleinere Leerräume (im Beispiel bei Blatt Nr. 6, 7 und 10) auch bei der Verfahrensvariante nach Fig.4 nicht vollständig zu vermeiden. In der Praxis beträgt dieser Verlust im Durchschnitt etwa 2,5%, was gegenüber den 20% gemäss Fig.3 ebenfalls eine beträchtliche Verbesserung darstellt.

Um das erfindungsgemässe Verfahren durchführen zu können, müssen die relativen Positionen der einzelnen Blätter in den Transportbahnen bzw. auf den zu diesen hinführenden Blattabführeinrichtungen 403-405 sowie die Längen der einzelnen Blätter dem die Blattverteileinrichtung steuernden Rechner 300 bekannt sein. Beim dargestellten Ausführungsbeispiel im Zusammenhang mit einem Minilab besitzt der auch den Printer 100 steuernde zentrale Rechner 300 die Informationen über die Länge der einzelnen aufeinanderfolgenden Blätter aufgrund des von ihm durchzufuhrenden Print-Jobs. Da derselbe Rechner auch die Blattverteileinrichtung 400 kennt er auch die Positionen der einzelnen Blätter auf den Transportbahnen sowie die Lagen der vorund nachlaufenden Querkanten der einzelnen Blätter und kann daraus die Transportbahn mit dem jeweils meisten bzw. zweitmeisten zur Verfügung stehenden Platz ermitteln und die Anordnung der Blätter entsprechend steuern. Falls in einem anderen Anwendungsfall die Informationen über die Längen der einzelnen Blätter nicht automatisch zur Verfügung stehen, können sie z.B. mittels geeigneter Sensoren gemessen werden. Der Fachmann bedarf dazu keiner weiteren Erläuterungen.

## Patentansprüche

1. Verfahren zur Behandlung von Blattmaterial, wobei in einer Einlaufreihenfolge anfallende zu behandelnde einzelne Blätter (B) des Blattmaterials auf zwei oder mehrere nebeneinander liegende Transportbahnen (201,202,203) verteilt, entlang dieser Transportbahnen durch eine Behandlungsstation (200) geführt und danach wieder nach ihrer ursprünglichen Einlaufreihenfolge sortiert werden, dadurch gekennzeichnet, dass die Verteilung der Blätter (B) unter Berücksichtigung der Auslastung der einzelnen Transportbahnen (201,202,203) in dem Sinne erfolgt, dass die Zwischenräume zwischen in derselben Transportbahn aufeinanderfolgenden Blättern (B) insgesamt minimal sind.

2. Verfahren nach Anspruch 1, dadurch gekennzeichnet, dass das in der Einlaufreihenfolge nächstfolgende Blatt (B) jeweils in der Transportbahn (201,202,203) mit dem meisten verfügbaren Platz angeordnet und dass die Blätter nach dem Verlassen der Behandlungsstation (200) nach der Reihenfolge ihrer vorlaufenden Querkanten sortiert werden.

3. Verfahren nach Anspruch 2, dadurch gekennzeichnet, dass das in der Einlaufreihenfolge nächstfolgende Blatt (B) mit seiner vorlaufenden Querkante jeweils mindestens um einen Sicherheitsabstand (d) hinter der nachlaufenden Querkante des in derselben Transportbahn (201,202,203) vorhergehenden Blatts (B) und mindestens um einen Sortierabstand (s) hinter der vorlaufenden Querkante des in der Einlaufreihenfolge vorhergehenden Blatts (B) angeordnet wird.

4. Vorrichtung nach Anspruch 1, dadurch gekennzeichnet, dass das in der Einlaufreihenfolge nächstfolgende Blatt (B) jeweils in der Transportbahn (201,202,203) mit dem meisten verfügbaren Platz angeordnet wenn die um einen Sortierabstand (s) und einen Minimalabstand (m) vergrösserte Länge (L₁) dieses Blatts (B) nicht kleiner ist als die Länge (L₂) des in der Einlaufreihenfolge diesem Blatt (B) folgenden dass andernfalls das in der Einlaufreihenfolge nächstfolgende Blatt (B) jeweils in der Transportbahn (201,202,203) mit dem zweitmeisten verfügbaren Platz angeordnet wird, und dass die Blätter nach dem Verlassen der Behandlungsstation (200) nach der Reihenfolge ihrer nachlaufenden Querkanten sortiert werden.

5. Vorrichtung nach Anspruch 4, dadurch gekennzeichnet, dass die Blätter (B) so auf den Transportbahnen (201,202,203) verteilt werden, dass ihre nachlaufenden Querkanten jeweils mindestens um den Sortierabstand (s) von einander entfernt sind und dass die vorlaufende Querkante jedes Blatts um mindestens den Sicherheitsabstand (d) hinter der nachlaufenden Querkante des in derselben Transportbahn unmittelbar vorangehenden Blatts liegt.

6. Vorrichtung zur Behandlung von Blattmaterial mit einer Behandlungsstation (200), durch welche die zu behandelnden Blätter (B) des Blattmaterials aufzwei oder mehrere nebeneinander liegende Transportbahnen (201,202,203) verteilt entlang dieser Transportbahnen führbar sind, mit einer Blattverteileinrichtung (400), welche die in einer Einlaufreihenfolge anfallenden zu behandelnden Blätter (B) auf die zwei oder mehreren nebeneinander liegenden Transportbahnen (201,202,203) verteilt, und mit einer Sortiereinrichtung (500), welche die Blätter (B) nach dem Verlassen der Behandlungsstation (200) wieder nach ihrer ursprünglichen Einlaufreihenfolge sortiert, dadurch gekennzeichnet, dass die Blattverteileinrichtung (400) die Blätter (B) unter Berücksichtigung der Auslastung der einzelnen Transportbahnen (201,202,203) in dem Sinne auf die einzelnen Transportbahnen verteilt, dass die Zwischenräume zwischen in derselben Transportbahn aufeinanderfolgenden Blättern insgesamt minimal sind.

7. Vorrichtung nach Anspruch 6, dadurch gekennzeichnet, dass die Blattverteileinrichtung (400) das in der Einlaufreihenfolge nächstfolgende Blatt (B) jeweils in der Transportbahn (201,202,203) mit dem meisten verfügbaren Platz anordnet, und dass die Sortiereinrichtung (500) die Blätter (B) nach dem Verlassen der Behandlungsstation (200) nach der Reihenfolge ihrer vorlaufenden Querkanten sortiert.

8. Vorrichtung nach Anspruch 6, dadurch gekennzeichnet, dass die Blattverteileinrichtung (400) das in der Einlaufreihenfolge nächstfolgende Blatt (B) jeweils in der Transportbahn (201,202,203) mit dem meisten verfügbaren Platz anordnet, wenn die um einen Sortierabstand (s) und einen Minimalabstand (m) vergrösserte Länge (L₁) dieses Blatts (B) gleich ist wie oder grösser ist als die Länge (L₂) des in der Einlaufreihenfolge diesem Blatt (B) folgenden Blatts, dass die Blattverteileinrichtung (400) andernfalls das in der Einlaufreihenfolge nächstfolgende Blatt (B) jeweils in der Transportbahn (201,202,203) mit dem zweitmeisten verfügbaren Platz anordnet, und dass die Sortiereinrichtung (500) die Blätter nach dem Verlassen der Behandlungsstation (200) nach der Reihenfolge ihrer nachlaufenden Querkanten sortiert.
